# FASCICULE DE BREVET EUROPEEN

(11) **EP 1 082 191 B1**
(45) Date de publication et mention de la délivrance du brevet: **17.04.2002**
(21) Numéro de dépôt: 99920928.1
(22) Date de dépôt: 27.05.1999
(51) Int. Cl.: B23Q 1/54

(54) **STRUCTURE KINEMATIQUE PARALLELE D' UNE MACHINE-OUTIL**
KINEMATISCHE PARALLELSTRUKTUR EINER WERKZEUGMASCHINE
DEVICE FOR USING A MACHINE TOOL LOGICAL DESIGN WITH PARALLEL ARCHITECTURE AND MACHINE TOOL COMPRISING SUCH A DEVICE

(30) Priorité: 27.05.1998 FR 9806668
(43) Date de publication de la demande: 14.03.2001
(73) Titulaire: Renault Automation Comau, 92365 Meudon La Forêt Cedex (FR)
(72) Inventeur: FIORONI, Claude, F-81100 Castres (FR)
(74) Mandataire: Richebourg, Michel François
(86) Numéro de dépôt international: FR9901237
(87) Numéro de publication internationale: WO9961198

(56) Documents cités:
- EP-A- 0 791 438
- EP-A- 1 075 348
- DE-A- 19 611 130
- GB-A- 2 308 322
- US-A- 4 962 676

## Description

### DOMAINE D'APPLICATION DE L'INVENTION

La présente invention a trait au domaine de l'usinage à grande vitesse et plus particulièrement aux adaptations permettant de déplacer l'outil dans des conditions optimales pour les opérations d'usinage classiques suivantes, à savoir :
- le perçage,
- le lamage
- le taraudage,
- et l'alésage.

### DESCRIPTION DE L'ART ANTÉRIEUR

Pour effectuer lesdites opérations, il est classiquement utilisé des machines-outils qui, supportant un élément tournant, par exemple une broche équipée d'un outil, assurent à la fois le déplacement de l'outil par rapport à la pièce à usiner de façon à l'amener en position d'usinage et le mouvement d'usinage de l'outil pour lui permettre d'effectuer l'opération d'usinage.

Dans le cas où la pièce à usiner nécessite plusieurs opérations d'usinage et afin d'optimiser les cadences de réalisation d'une telle pièce, il est classiquement utilisé une machine spéciale qui, constituée de plusieurs broches parallèles pré-positionnées comportant chacune un outil, n'assure que le déplacement d'usinage de ces dernières vers la pièce à usiner pour leur permettre d'effectuer l'opération d'usinage. Ces machines spéciales adoptent un concept classiquement appelé "concept de tête multi-broches" employé sur les machines de type transfert très utilisées dans le domaine de l'usinage en grande série et notamment pour l'usinage des pièces automobiles.

Toujours pour répondre aux critères d'optimisation des cadences de production des pièces à usiner, les concepteurs de machines-outils ont été amenés à spécialiser leurs machines, ce qui, jusqu'à maintenant constituait la meilleure solution au critère de rapidité de production. Ainsi, pour éviter tous les temps morts et notamment ceux de changement d'outils d'usinage, les machines-outils ne consacrent plus leur cinématique que pour un seul mouvement d'usinage et une seule tête multi-broches et sont entièrement dédiées à un seul usinage. Cette spécialisation qui permet de supprimer toute cinématique ou module mécanique assurant d'autres mouvements ou le changement d'outils et donc d'améliorer la vélocité opératoire de telles machines ainsi que le rendement de production, conduit cependant, à l'incapacité pour leur utilisateur de les reconvertir à une autre opération d'usinage, notamment lorsque le produit, comportant la pièce à usiner nécessitant une des opérations d'usinage que réalisait ladite machine-outil, est abandonné et n'est plus présent ou nécessaire sur le marché auquel il est destiné.

La durée de vie des produits et notamment de ceux destinés à l'automobile diminuant chaque jour, la mise en place d'une machine transfert complète entièrement dédiée à l'usinage d'une seule pièce dont le produit qui la comporte peut disparaître très rapidement devient un investissement très lourd.

Les développements récents de l'usinage à grande vitesse associés à l'utilisation d'une structure logique de positionnement à architecture parallèle permettent d'envisager un usinage au moyen d'une tête mono-broche et donc mono-outil dans des temps comparables à ceux d'un usinage au moyen d'une tête multi-broches.

La principale caractéristique d'une structure parallèle réside dans le fait que la mise en mouvement de l'organe mobile sur un axe ne demande pas la mise en mouvement des actionneurs et dispositifs cinématiques nécessaires à la mise en mouvement dudit organe mobile sur les autres axes, ce qui permet d'atteindre les temps d'usinage susmentionnés. Ainsi, la structure parallèle adopte une cinématique du type de celle assurant le positionnement et le déplacement d'un organe mobile et comportant au moins un élément fixe, au moins un organe mobile et au moins trois actionneurs comportant chacun une partie fixe et une partie mobile, la partie fixe de chaque actionneur étant solidaire de l'élément fixe, la partie mobile de chaque actionneur étant solidaire de l'organe mobile par l'intermédiaire d'un élément de liaison.

La demanderesse a constaté que la mise en oeuvre d'une structure logique à architecture parallèle afin d'en réaliser une application concrète dans l'industrie ou dans une chaîne d'usinage, présente de nombreuses difficultés qui ont conduit les concepteurs de machines-outils à rester au stade de prototype ou à des compromis douteux dans les choix technologiques requis, compromis diminuant les capacités envisageables en théorie d'une machine-outil à structure parallèle.

Un des inconvénients d'une telle structure réside dans la multiplication des articulations dont une des conséquences est que la broche maintenue à l'extrémité des bras de positionnement crée un bras de levier important par rapport à la base des bras de positionnement difficilement paramétrable. La solution à ce problème de bras de levier a été jusqu'à maintenant de placer l'axe de la broche et donc de l'outil verticalement afin que les effets de la gravité sur la tête d'outils soient pris en compte par les actionneurs des bras de positionnement.

Un autre inconvénient des machines-outils à architecture parallèle réside dans le fait qu'elles ont été conçues avec une flexibilité totale, c'est à dire avec une broche pouvant être orientée suivant six degrés de liberté avec des possibilités de changement d'outils. Cette multiplication des fonctions d'une machine-outil ralentit sa capacité à usiner en multipliant les temps morts.

Le document EP-A-1 075 348, qui appartient à l'état de la technique selon l'article 54 (3) CBE, représente l'état de la technique le plus proche.

Un exemple de mise en oeuvre dans le domaine de l'usinage d'une structure parallèle est décrit dans le document n° EP 0791438. Dans ce document est décrite une possibilité de réaliser une machine-outil dont le coulant porte-outil serait en position horizontale. Cette possibilité constitue un des compromis ci-dessus mentionnés en ce que le mouvement selon l'axe du coulant est réalisé non par la structure parallèle mais par une motorisation indépendante associée à un fourreau porte-coulant lequel est lui lié à la structure parallèle. Ainsi, dans cette possibilité de mise en oeuvre, la structure parallèle assure le mouvement du fourreau porte-coulant selon un plan vertical perpendiculaire à l'axe du coulant lui-même et c'est le fourreau porte-coulant qui assure le mouvement en translation du coulant selon son axe perpendiculaire au plan précité. Cette disposition particulière est due aux difficultés ci-dessus mentionnées de réaliser la commande et la mise en mouvement d'un coulant porte-outil associé à une structure parallèle qui met en oeuvre une pluralité d'articulations.

### BRÈVE DESCRIPTION DE L'INVENTION

Partant de cet état de fait, la demanderesse a mené des recherches sur un mode de réalisation préféré d'une structure parallèle à savoir du type de celle où chacun des éléments de liaison est monté en articulation d'une part sur la partie mobile de l'actionneur et monté en articulation d'autre part sur l'organe mobile et du type de celle où l'ensemble est agencé de façon à ce que l'inclinaison et l'orientation dans l'espace de l'organe mobile restent inchangées, quels que soient les mouvements des parties mobiles des actionneurs, de façon à constituer un parallélogramme déformable, l'organe mobile étant constitué par un fourreau-support d'une broche porte-outil et la susdite structure parallèle étant disposée de façon à ce que l'axe de la broche soit horizontal.

Ces recherches ont abouti à une mise en oeuvre nouvelle et inventive d'une structure parallèle permettant de garder tous les avantages d'une structure parallèle tout en l'adaptant de façon optimale à une application particulière du domaine de l'usinage.

Selon la caractéristique principale de l'invention, le dispositif de mise en oeuvre d'une structure parallèle est remarquable en ce qu'il comporte un moyen d'équilibrage qui se compose d'un module de guidage dudit fourreau-support suivant un axe horizontal associé à un module de soutien constitué par un vérin qui, autorisant le déplacement dudit module de guidage suivant un plan vertical perpendiculaire à l'axe de broche et autorisant les mouvements rectilignes dudit fourreau-support selon les axes X, Y et Z, soutient l'ensemble fourreau-support, broche et outil de sorte que le poids de ce dernier ne soit pas reporté sur ladite structure parallèle.

La limitation des mouvements de la structure parallèle de l'invention est volontaire afin de diminuer le nombre de paramètres à gérer et par choix de la demanderesse qui ne veut utiliser cette structure cinématique que pour certaines applications pour lesquelles elle est particulièrement indiquée.

Cette orientation est particulièrement avantageuse en ce qu'elle permet d'assurer les mêmes travaux que ceux des machines-outils spécialisées composant les machines transferts et donc facilitent l'intégration d'une machine-outil adoptant une telle structure dans une chaîne d'usinage classique.

Une telle orientation est nouvelle et vient à l'encontre de tous les autres concepts de machines-outils adoptant une structure parallèle en ce que la machine-outil adoptant une telle structure sera limitée à des usinages droits. Cette orientation nouvelle et particulièrement avantageuse de la structure logique du dispositif de l'invention, à savoir assurer les mouvements rectilignes d'un organe mobile à axe horizontal, nécessite des moyens de mise en oeuvre spéciaux dont un dispositif d'équilibrage.

Contrairement au document cité en art antérieur, ce dispositif autorise la structure parallèle à assurer les mouvements rectilignes du coulant sur les trois axes de mouvements. Ainsi, le dispositif de l'invention permet d'exploiter toutes les possibilités d'une structure parallèle dans le cadre de mouvements rectilignes.

Un autre objet de l'invention porte sur la machine-outil adoptant un dispositif conforme à l'invention.

Les concepts fondamentaux de l'invention venant d'être exposés ci-dessus dans leur forme la plus élémentaire, d'autres détails et caractéristiques ressortiront plus clairement à la lecture de la description qui suit donnant, à titre d'exemple non limitatif et en regard du dessin annexé, un mode de réalisation d'un dispositif de mise en oeuvre d'une structure logique à architecture parallèle conforme à l'invention.

### BRÈVE DESCRIPTION DES DESSINS

La figure 1 est une vue schématique d'ensemble en trois dimensions d'un mode de réalisation d'un dispositif de mise en oeuvre d'une structure logique,
la figure 2 est une vue schématique en perspective de détail de la disposition des actionneurs assurant la mise en mouvement,
la figure 3 est une vue schématique en perspective d'ensemble du châssis d'un mode de réalisation de bâti de machine-outil adoptant la disposition des actionneurs illustrée par la figure 2.

### DESCRIPTION DES MODES DE RÉALISATION

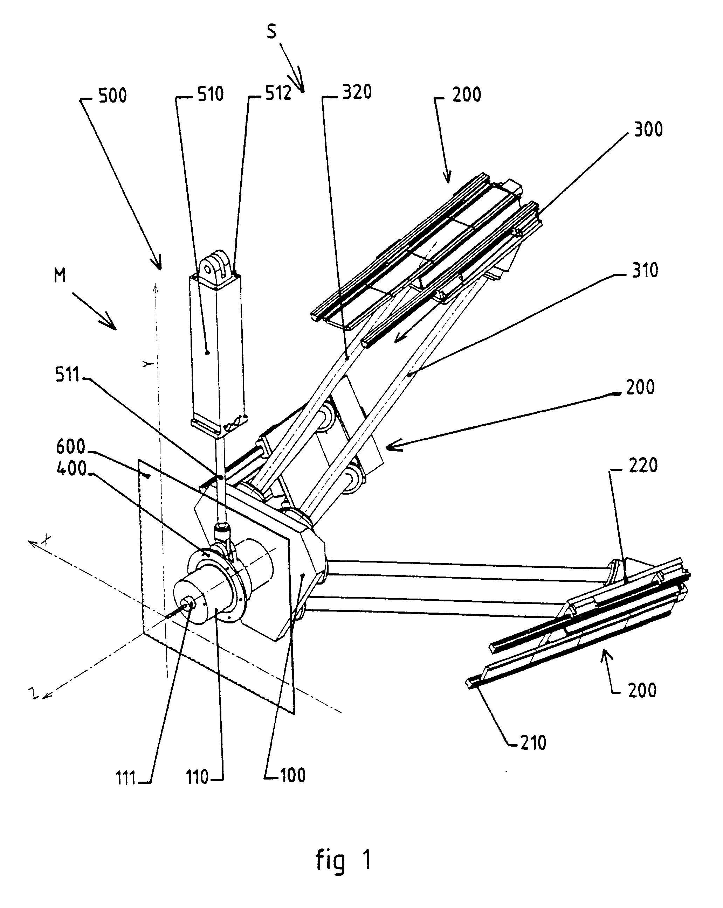

Telle qu'illustrée sur le dessin de la figure 1, la structure parallèle référencée dans son ensemble S est du type de celle assurant le positionnement et le déplacement d'un organe mobile 100 et comportant au moins un élément fixe, au moins un organe mobile 100 et au moins trois actionneurs 200 comportant chacun une partie fixe 210 et une partie mobile 220, la partié fixe 210 de chaque actionneur 200 étant solidaire de l'élément fixe, la partie mobile 220 de chaque actionneur 200 étant solidaire de l'organe mobile 100 par l'intermédiaire d'un élément de liaison 300 qui est ici constitué par une paire de bras 310, 320. Chacun des éléments de liaison 300 étant monté en articulation d'une part sur la partie mobile 220 de l'actionneur 200 et monté en articulation d'autre part sur l'organe mobile 100.

L'ensemble de la structure parallèle est ici agencé de façon à ce que l'inclinaison et l'orientation dans l'espace de l'organe mobile 100 restent inchangées, quels que soient les mouvements des parties mobiles 220 des actionneurs 200, de façon à constituer un parallélogramme déformable, l'organe mobile 100 étant constitué par un fourreau-support 110 d'une broche porte-outil 111.

Selon un mode de réalisation particulièrement avantageux, la susdite structure parallèle S est disposée de façon à ce que l'axe de la broche 111 soit horizontal.

Afin d'autoriser une station horizontale à une telle structure articulée, le dispositif permettant de le mettre en oeuvre comporte un moyen d'équilibrage M qui, autorisant les mouvements rectilignes dudit fourreau-support 110 selon les axes X, Y et Z, soutient l'ensemble fourreau-support 110, broche 111 et outil de sorte que le poids de ce dernier ne soit pas reporté sur ladite structure parallèle S.

Selon un mode de réalisation préférentiel, ledit moyen d'équilibrage M se compose d'un module de guidage 400 dudit fourreau-support 110 suivant un axe horizontal associé à un module de soutien 500 qui, autorisant le déplacement dudit module de guidage 400 suivant un plan vertical perpendiculaire à l'axe de la broche 111, assure son soutien dans ce plan.

Selon le choix de réalisation particulièrement judicieux illustré, le fourreau-support 110 adopte une forme extérieure cylindrique ce qui implique une caractéristique particulièrement avantageuse du dispositif de l'invention en ce que le susdit module de guidage 400 est constitué d'un anneau de guidage assurant la fonction de palier de glissement pour le susdit cylindre 110 selon l'axe horizontal Z.

Selon un mode préféré de réalisation, le susdit palier de glissement est un palier du type aérostatique.

Un premier avantage à l'utilisation d'un palier aérostatique réside dans le fait qu'il supprime les forces de frottement dans le guidage qu'il assure.

En outre, le susdit module de guidage 400 dudit fourreau-support 110 est solidaire d'une paroi de protection 600 qui, séparant la zone d'usinage proprement dite de la zone d'entraînement occupée par ladite structure parallèle S, suit les mouvements dudit module de guidage 400 dans le plan vertical perpendiculaire à l'axe du fourreau-support 110.

L'utilisation d'un palier aérostatique est donc particulièrement avantageuse en ce que non seulement il guide le fourreau-support 400 mais assure également une étanchéité optimale entre la zone d'usinage et la zone d'entraînement au moyen du flux d'air le caractérisant, et ceci en un lieu où théoriquement l'étanchéité est la plus faible.

Comme illustré, le susdit module de soutien 500 dudit module de guidage 400 est constitué par au moins un vérin 510, dont l'extrémité de la tige 511 est associée de façon articulée audit module de guidage 400 et dont le corps 512 est associé de façon articulée à un point fixe par rapport audit module de guidage 400, à savoir le bâti de la machine-outil non représenté. Etant donné que les mouvements du module de guidage sont rectilignes, les articulations liant le corps 512 du vérin 510 au bâti et l'extrémité de tige 511 du vérin 510 audit module de guidage 400 sont constituées par des liaisons du type pivots dont l'axe est, ici, parallèle à l'axe de la broche 111. L'association de ces deux liaisons du type pivot à la translation de la tige 511 du vérin 510, permet au module de soutien 500, d'assurer l'équilibrage de la structure en suivant les mouvements, dans le plan vertical perpendiculaire à l'axe de la broche 110, du module de guidage 400.

Selon un mode préféré mais non limitatif de réalisation, ledit vérin est du type pneumatique.

La figure 1 du dessin annexé illustre l'intérieur d'une machine-outil adoptant le dispositif selon les caractéristiques sus-énoncées. Cette machine-outil dont seule la structure interne est représentée, comporte une paroi de protection 600 séparant la zone d'usinage de la zone d'entraînement suivant les évolutions d'un organe mobile constitué ici par le fourreau-support 110 la traversant dans un plan vertical perpendiculaire à l'axe dudit organe mobile 110, ledit organe mobile 110 étant guidé par un palier aérostatique 400 solidaire de ladite paroi de protection 600 et lié de façon articulée, sur sa partie située dans la zone d'entraînement à l'extrémité de la tige 511 d'un vérin d'équilibrage 510 dont le corps 512 est lié de façon articulée au bâti de ladite machine-outil non représentée.

Selon le mode de réalisation illustré, les actionneurs assurant la mise en mouvement des extrémités de bras de positionnement 310, 320 auxquelles ils sont liés, sont constitués par des moteurs linéaires couplés à des moyens de guidage solidaires du bâti de la machine-outil. Ce choix technologique est bien entendu, non limitatif, tout type d'actionneur pouvant mettre en mouvement les paires de bras constituant ladite structure parallèle S.

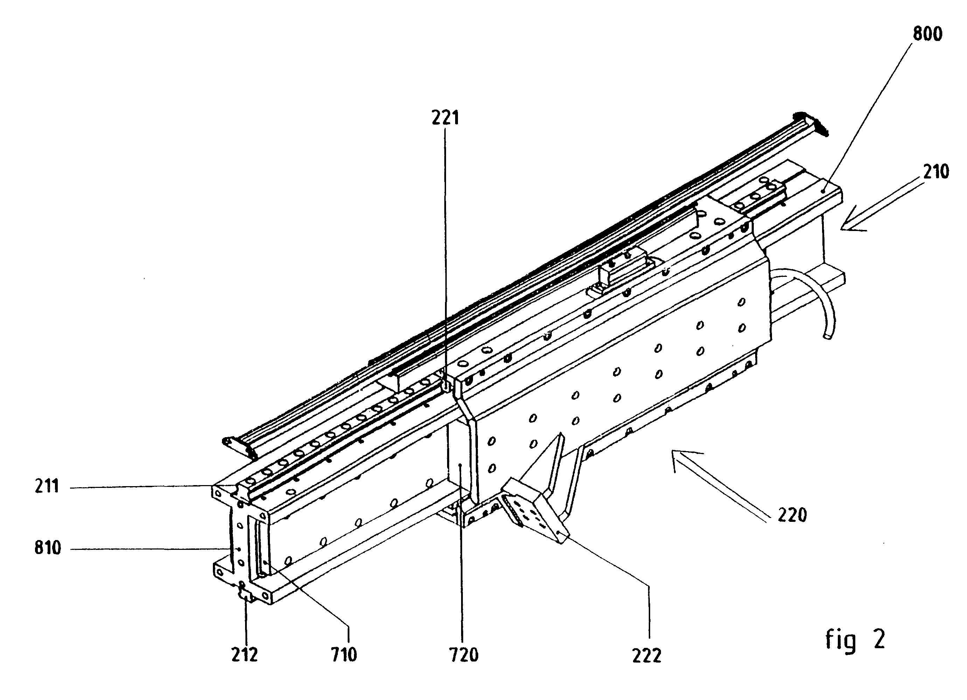

Selon un mode de réalisation particulièrement avantageux, les actionneurs sont chacun constitués par deux moteurs linéaires pour lesquels la demanderesse a imaginé dans le cadre d'une telle solution d'entraînement, une disposition particulièrement avantageuse de ces derniers illustrée sur le dessin de la figure 2.

Tels qu'illustrés sur ledit dessin, les deux moteurs linéaires étant constitués d'un bloc primaire 720 et d'un bloc secondaire 710, la machine-outil est remarquable en ce que les moteurs sont associés en vis-à-vis à une poutre symétrique 800 dont la section comprend au moins une partie plane 810 pour accueillir de part et d'autre les blocs secondaires 710 des deux moteurs linéaires et qui est associée à au moins un élément de guidage dit élément principal de guidage 211 du mouvement linéaire créé entre le bloc primaire 720 et le bloc secondaire 710 desdits moteurs linéaires.

Selon une autre caractéristique particulièrement avantageuse de l'invention, les blocs primaires 720 des moteurs linéaires sont fixés en vis-à-vis et écartés l'un de l'autre au moyen d'un boîtier comprenant au moins un élément de guidage dit élément secondaire de guidage 221 complémentaire audit élément principal de guidage 211, l'ensemble formé par ladite poutre 800, les blocs secondaires 710 et l'élément principal de guidage 211 venant s'introduire dans ledit boîtier de façon à ce que les blocs primaires 720 viennent en vis-à-vis avec leur bloc secondaire 710 respectif et que le guidage en translation du mouvement créé entre les différents blocs des moteurs linéaires soit assuré par l'association des éléments principal 211 et secondaire 221 de guidage.

Ce concept d'entraînement par moteurs linéaires est particulièrement innovant en ce qu'il assure les fonctions d'un vérin électrique linéaire à grande vitesse, la partie mobile pouvant être indifféremment la poutre 800 ou le boîtier supportant les blocs primaires 720 des moteurs linéaires.

De plus, selon le mode de réalisation non limitatif illustré, le boîtier est préformé de façon à être disposé autour de l'ensemble fixe formé par la poutre 800, les deux blocs secondaires de moteurs linéaires 710 et les éléments principaux 211 et 212 de guidage. Ainsi, le boîtier forme un palier de guidage et d'entraînement à la poutre 800 et la poutre constitue la partie fixe d'un vérin linéaire dont la partie mobile est constituée par le boîtier.

Selon un mode de réalisation préféré mais non limitatif, le boîtier support des blocs primaires 720 est mobile et constitue la partie mobile 220 des actionneurs 200 par rapport à ladite poutre 800 support des blocs secondaires 710 laquelle est fixe et solidaire du bâti de ladite machine-outil.

Selon un mode de réalisation particulièrement avantageux, la section de la poutre-support 800 est constituée par un I dont la partie plane verticale reçoit de part et d'autre, le bloc secondaire 710 des deux moteurs linéaires et les parties planes horizontales les parties fixes 211 et 212 de guidage dites éléments principaux de guidage de la partie mobile 220 des actionneurs 200.

L'utilisation d'une poutre-support symétrique 800 adoptant une partie plane 810 permet de monter les blocs secondaires 710 des moteurs linéaires de façon à ce que les efforts d'attraction de ces derniers soient équilibrés.

Bien entendu, ladite partie mobile 220 constituée par le boîtier, comprend des moyens 222 permettant d'accueillir les extrémités de la paire de bras. Cette partie mobile est en conséquence particulièrement compacte et adopte elle aussi une structure symétrique. Cette symétrie et cette compacité est particulièrement avantageuse en ce qu'un des principaux inconvénients d'une structure parallèle réside dans le volume nécessaire aux mouvements des bras ou éléments de liaison 300 ainsi qu'à leur entraînement. De plus, la symétrie permet de réduire le nombre de pièces différentes pour réaliser ledit actionneur 200.

Selon une autre caractéristique technique particulièrement judicieuse, le boîtier support des blocs primaires 720 des moteurs linéaires et constituant la partie mobile 220 des actionneurs 200 est associé à un transducteur de position linéaire dont la partie mobile est associée à la partie mobile 220 des actionneurs 200 et la partie fixe à la poutre-support 800. Aussi, le module d'entraînement illustré en figure 2 et imaginé dans le cadre de l'entraînement d'une structure parallèle est une unité indépendante constituant un axe numérisé à part entière pouvant s'appliquer à tout type d'application d'entraînement en translation.

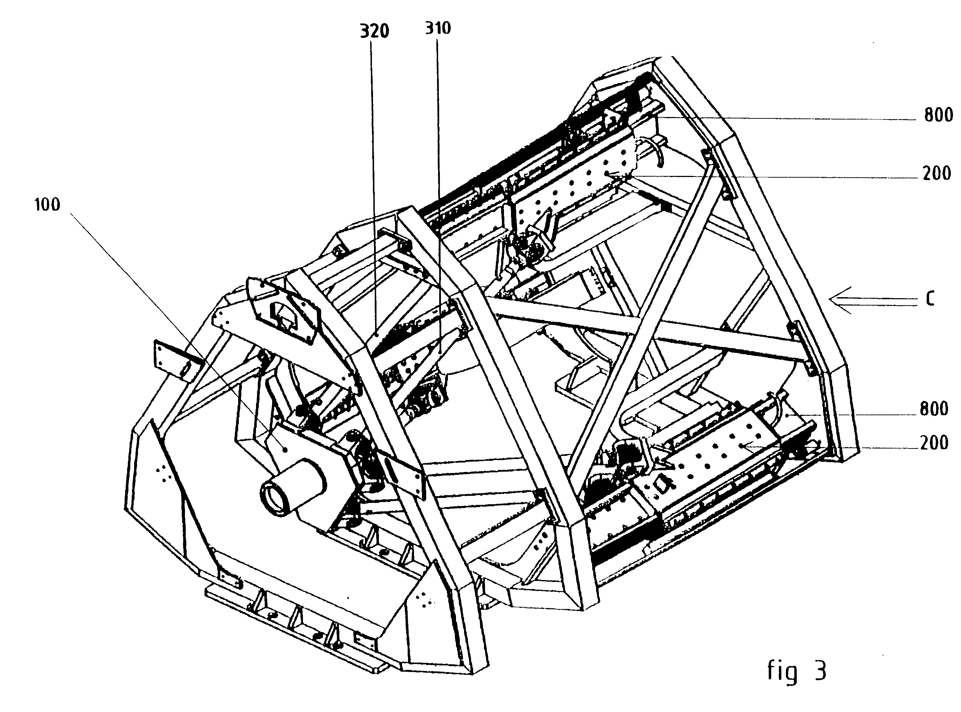

Tel qu'illustré sur le dessin de la figure 3, le châssis, référencé C dans son ensemble, du bâti de la machine-outil adopte sensiblement la forme extérieure d'un triangle équilatéral dont les angles accueillent les poutres-supports 800 des parties mobiles 220 des actionneurs 200. Cette structure triangulaire est particulièrement avantageuse en ce quelle optimise la compacité de la machine-outil.

Selon un mode de réalisation particulièrement judicieux pour la pleine exploitation d'une machine-outil utilisant un dispositif conforme à l'invention, les mouvements de la structure logique S sont tels que ledit organe mobile 110 suit des mouvements de positionnement d'outil rectilignes et un mouvement d'usinage rectiligne et parallèle à l'axe horizontal dudit organe mobile 100 de sorte que ladite machine-outil soit dédiée aux opérations d'usinage telles que le perçage, le lamage, le taraudage et l'alésage.

Cette caractéristique est particulièrement avantageuse en ce qu'elle réalise une adéquation optimale entre les capacités d'une machine-outil utilisant une structure logique à architecture parallèle telle que mise en oeuvre par le dispositif de l'invention et une application en machine transfert. En effet, une telle machine-outil, en se limitant dans ses mouvements, possède des performances supérieures en vitesse de déplacements à celles des machines-outils multi-broches entièrement dédiées à un usinage ce qui permet d'envisager des temps d'usinage équivalents pour une même phase mais permet également le changement d'outils ainsi qu'un changement de positionnement de l'outil et par voie de fait la reconversion d'une machine transfert composée de machines-outils conformes à l'invention.

Cette machine-outil peut donc s'intégrer dans une machine de grande cadence de type transfert de pièce en tant que poste universel de perçage, de lamage, de taraudage et d'alésage totalement reconvertible pour d'autres productions.

On comprend que le dispositif de mise en oeuvre d'une structure parallèle qui vient d'être ci-dessus décrit et représenté, l'a été en vue d'une divulgation plutôt que d'une limitation.

## Revendications

1. Dispositif de mise en oeuvre d'une structure parallèle (S) du type de celle assurant le positionnement et le déplacement d'un organe mobile (100) comportant au moins un élément fixe, au moins un organe mobile (100) et au moins trois actionneurs (200) comportant chacun une partie fixe (210) et une partie mobile (220), la partie fixe (210) de chaque actionneur (200) étant solidaire de l'élément fixe, la partie mobile (220) de chaque actionneur (200) étant solidaire de l'organe mobile (100) par l'intermédiaire d'un élément de liaison (300), chacun des éléments de liaison (300) étant monté en articulation d'une part sur la partie mobile (220) de l'actionneur (200) et monté en articulation d'autre part sur l'organe mobile (100) et du type de celle où l'ensemble est agencé de façon à ce que l'inclinaison et l'orientation dans l'espace de l'organe mobile (100) restent inchangées, quels que soient les mouvements des parties mobiles (220) des actionneurs (200), de façon à constituer un parallélogramme déformable, l'organe mobile (100) étant constitué par un fourreau-support (110) d'une broche porte-outil (111), et la susdite structure parallèle (S) étant disposée de façon à ce que l'axe de la broche (111) soit horizontal, et ledit dispositif comporte un moyen d'équilibrage (M) qui se compose d'un module de guidage (400) dudit fourreau-support (110) suivant un axe horizontal associé à un module de soutien (500) constitué par un vérin (510) qui, autorisant le déplacement dudit module de guidage (400) suivant un plan vertical perpendiculaire à l'axe de broche (111) et autorisant les mouvements rectilignes dudit fourreau-support (110) selon les axes X, Y et Z, soutient l'ensemble fourreau-support (110), broche (111) et outil de sorte que le poids de ce dernier ne soit pas reporté sur ladite structure parallèle (S) .

2. Dispositif selon la revendication 1 dans lequel le fourreau-support (110) adopte une forme extérieure cylindrique, **CARACTÉRISÉ PAR LE FAIT QUE** le susdit module de guidage (400) est constitué d'un anneau de guidage assurant la fonction d'un palier de glissement pour le susdit cylindre (110).

3. Dispositif selon la revendication 1, **CARACTÉRISÉ PAR LE FAIT QUE** le susdit module de guidage (400) dudit fourreau-support (110) est solidaire d'une paroi de protection (600) qui, séparant la zone d'usinage proprement dite de la zone d'entraînement occupée par ladite structure parallèle (S), suit les mouvements dudit module de guidage (400) dans le plan vertical perpendiculaire à l'axe du fourreau-support (110).

4. Dispositif selon la revendication 1, **CARACTÉRISÉ PAR LE FAIT QUE** le susdit module de soutien (500) dudit module de guidage (400) est constitué par au moins un vérin (510) dont l'extrémité de la tige (511) est associée, de façon articulée, audit module de guidage (400) et dont le corps (512) est associé, de façon articulée, à un point fixe par rapport audit module de guidage (400).

5. Dispositif selon les revendications 1 et 2, **CARACTÉRISÉ PAR LE FAIT QUE** le susdit palier de glissement (400) formant module de guidage est un palier du type aérostatique.

6. Dispositif selon la revendication 4, **CARACTÉRISÉ PAR LE FAIT QUE** le susdit vérin (510) est du type pneumatique.

7. Machine-outil adoptant le dispositif selon la revendication 1, **CARACTÉRISÉE PAR LE FAIT QU'**elle comporte une paroi de protection (600) séparant la zone d'usinage de la zone d'entraînement suivant les évolutions d'un organe mobile horizontal (100) la traversant dans un plan vertical perpendiculaire à l'axe dudit organe mobile (100), ledit organe mobile (100) étant guidé par un palier aérostatique (400) solidaire de ladite paroi de protection (600) et lié de façon articulée, sur sa partie située dans la zone d'entraînement à l'extrémité de tige (511) d'un vérin d'équilibrage (510) dont le corps (512) est lié de façon articulée au bâti de ladite machine-outil.

8. Machine-outil selon la revendication 7, **CARACTÉRISÉE PAR LE FAIT QUE** les actionneurs assurant la mise en mouvement des extrémités de bras de positionnement (310, 320) auxquelles ils sont liés, sont constitués par des moteurs linéaires couplés à des moyens de guidage solidaires du bâti de la machine-outil.

9. Machine-outil selon la revendication 8 dans laquelle les moteurs linéaires sont constitués d'un bloc primaire (720) et d'un bloc secondaire (710), **CARACTERISÉE PAR LE FAIT QUE** lesdits moteurs sont associés en vis-à-vis à une poutre symétrique (800) dont la section comprend au moins une partie plane (810) pour accueillir de part et d'autre, les blocs secondaires (710) des deux moteurs linéaires et qui est associée à au moins un élément de guidage dit élément principal de guidage (211) du mouvement linéaire créé entre le bloc primaire (720) et le bloc secondaire (710) desdits moteurs linéaires.

10. Machine-outil selon la revendication 9, **CARACTÉRISÉE PAR LE FAIT QUE** les blocs primaires (720) des moteurs linéaires sont fixés en vis-à-vis et écartés l'un de l'autre au moyen d'un boîtier comprenant au moins un élément de guidage dit élément secondaire de guidage complémentaire audit élément principal de guidage (211), l'ensemble formé par ladite poutre (800), les blocs secondaires (710) et l'élément principal de guidage (211) venant s'introduire dans ledit boîtier de façon à ce que les blocs primaires (720) viennent en vis-à-vis avec leur bloc secondaire (710) respectif et que le guidage en translation du mouvement créé entre les différents blocs des moteurs linéaires soit assuré par l'association des éléments principal (211) et secondaire de guidage.

11. Machine-outil selon la revendication 10, **CARACTÉRISÉE PAR LE FAIT QUE** le boîtier support des blocs primaires (720) est mobile par rapport à ladite poutre (800) support des blocs secondaires (710) laquelle est fixe et solidaire du bâti de ladite machine-outil.

12. Machine-outil selon la revendication 9, **CARACTÉRISÉE PAR LE FAIT QUE** le châssis (C) du bâti de la machine-outil adopte sensiblement la forme extérieure d'un triangle équilatéral dont les angles accueillent les poutres-supports (800) des parties mobiles (220) des actionneurs (200)

13. Machine-outil selon la revendication 7, **CARACTÉRISÉE PAR LE FAIT QU'**elle est destinée à s'intégrer dans une machine de grande cadence de type transfert de pièce en tant que poste universel de perçage, de lamage, de taraudage et d'alésage totalement reconvertible pour d'autres productions.

## Claims

1. Device for implementing a parallel structure (S) of the type that ensures the positioning and displacement of a mobile element (100), comprises at least one fixed element, at least one mobile element (100) and at least three acting elements (200) comprising each a fixed part (210) and a mobile part (220), the fixed part (210) of each acting element (200) being interdependent with the fixed element, the mobile part (220) of each acting element (200) being interdependent of the mobile element (100) by means of a linkage element (300), each of the linkage elements (300) being flexibly mounted on one hand on the mobile part (220) of the acting element (200) and flexibly mounted on the other hand on the mobile element (100) and of the type where the assembly is arranged so that the inclination and orientation in space of the mobile element (100) remain unchanged, whatever the motions of the mobile parts (220) of the acting elements (200), in order to constitute a moldable parallelogram, the mobile element (100) being constituted by a support-sheath (110) of a tool-holder broach (111) and the aforesaid parallel structure (S) being arranged so that the axis of the broach (111) is horizontal, and said device includes a balancing means (M) that is comprised by a guiding module (400) of said support-sheath (110) along an horizontal axis associated with a support module (500) constituted by a jack (510) that, allowing the displacement of said guiding element (400) along a vertical plane perpendicular to the axis of the broach (111) and allowing the rectilinear motions of said support-sheath (110) according to the X, Y and Z axis, supports the assembly support-sheath (110), broach (111) and tool, so that the weight of the latter is not transferred on said parallel structure (S).

2. Device according to claim 1 in which the support-sheath (110) adopts an external cylindrical shape, wherein said guiding module (400) is constituted by a guiding ring ensuring the function of a sliding bearing for the aforesaid cylinder (110).

3. Device according to claim 1, wherein the aforesaid guiding module (400) of said support-sheath (110) is interdependent with a protection wall (600) that, separating the machining zone per say from the drive zone occupied by said parallel structure (S), follows the motions of said guiding module (400) in the vertical plane perpendicular to the axis of the support-sheath (110).

4. Device according to claim 1, wherein the aforesaid support module (500) of said guiding module (400) is constituted by at least one jack (510), the end of the rod (511) of which is associated in a flexible manner with said guiding module (400) and the body (512) of which is associated in a flexible manner to a fixed point with respect to said guiding module (400).

5. Device according to claims 1 and 2, wherein the aforesaid sliding bearing (400) forming a guiding module is a bearing of the aerostatic type.

6. Device according to claim 4, wherein the aforesaid jack (510) is of a pneumatic type.

7. Machine tool adopting the device according to claim 1, wherein it comprises a protection wall (600) separating the machining zone from the drive zone following the evolution of a horizontal mobile element (100) going through it in a vertical plane perpendicular to the axis of said mobile element (100), said mobile element (100) being guided by an aerostatic bearing (400) interdependent with said protection wall (600) and linked in a flexible manner, on its part located in the drive zone to the end of rod (511) of a balancing jack (510), the body (512) of which is linked in a flexible manner to the frame of said machine tool.

8. Machine tool according to claim 7, wherein the acting elements ensuring the setting into action of the ends of the positioning arms (310, 320) to which they are linked, are constituted by linear motors coupled to guiding means interdependent with the frame of the machine tool.

9. Machine tool according to claim 8, in which the linear motors are constituted by a primary block (720) and a secondary block (710), wherein said motors are associated, opposite each other, with a symmetrical beam (800), the section of which comprises at least one plane part (810) for the reception, on each side, of the secondary blocks (710) of both linear motors, and which is associated with at least one guiding element, said main guiding element (211), of the linear motion created between the primary block (720) and the secondary block (710) of said linear motors.

10. Machine tool according to claim 9, wherein the primary blocks (720) of the linear motors are fixed opposite each other and spaced apart by means of a case comprising at least one guiding element, said secondary guiding element, complementary to said main guiding element (211), the assembly formed by said beam (800), the secondary blocks (710) and the main guiding element (211) entering into said case, so that the primary blocks (720) place themselves opposite each other with their respective secondary block (710) and that the guiding in translation of the motion created between the different blocks of the linear motors is ensured by the association of the main guiding element (211) and the secondary guiding element.

11. Machine tool according to claim 10, wherein the support-case of the primary blocks (720) is mobile with respect to said beam (800), support of the secondary blocks (710), said beam is fixed and interdependent with the frame of said machine tool.

12. Machine tool according to claim 9, wherein the underframe (C) of the frame of the machine tool mainly adopts the external shape of an equilateral triangle, the angles of which receive the support-beams (800) of the mobile parts (220) of the acting elements (200).

13. Machine tool according to claim 7, wherein it is intended to be integrated into a high rate machine of the transfer of pieces type as a universal station for drilling, spot facing, tapping, and boring being wholly reconvertible for other productions.

## Patentansprüche

1. Vorrichtung zur Verwirklichung einer Parallelstruktur (S), der Art welche die Positionierung und die Verschiebung eines beweglichen Bauteils (100) gewährleistet, mit wenigstens einem feststehenden Teil, mit wenigstens einem beweglichen Bauteil (100) und mit wenigstens drei Betätigungsteilen (200), deren jedes einen feststehenden Abschnitt (210) und einen beweglichen Abschnitt (220) aufweist, wobei der feststehende Abschnitt (210) eines jeden Betätigungsteils (200) fest mit dem feststehenden Teil verbunden ist und der bewegliche Abschnitt (220) eines jeden Betätigungsteils (200) fest mit dem beweglichen Bauteil (100) verbunden ist mittels eines Verbindungsteils (300), wobei jedes Verbindungsteil (300) einerseits gelenkig am beweglichen Abschnitt (220) des Betätigungsteils (200) und andererseits gelenkig am beweglichen Bauteil (100) befestigt ist und von der Art bei der der Aufbau derart ausgestaltet ist, dass die Neigung und die räumliche Orientierung des beweglichen Bauteils (100) unabhängig von den Bewegungen der beweglichen Abschnitte (220) der Betätigungsteile (200) beibehalten werden, sodass ein verformbares Parallelogramm gebildet wird, wobei das bewegliche Bauteil (100) aus einem Hülsenträger (110) einer Werkzeugspindel (111) besteht und wobei die Parallelstruktur (S) derart angeordnet ist, dass die Achse der Spindel (111) horizontal verläuft und dass die Vorrichtung eine Ausgleichsanordnung (M) aufweist, bestehend aus einem Modul (400) zur Führung des Hülsenträgers (110) entlang einer horizontalen Achse die einem Modul (500) zur Stützung zugeordnet ist, bestehend aus einem Druckzylinder (510), der unter Ermöglichung einer Verschiebung des Moduls (400) zur Führung entlang einer vertikalen Ebene senkrecht zur Achse der Spindel (111) und geradliniger Bewegungen des Hülsenträgers (110) entlang der Achsen X, Y und Z die Anordnung aus Hülsenträger (110), Spindel (111) und Werkzeug derart trägt, dass das Gewicht des letzteren nicht auf die Parallelstruktur (S) übertragen wird.

2. Vorrichtung nach Anspruch 1, bei der der Hülsenträger (110) eine zylindrische Aussenform aufweist, **dadurch gekennzeichnet, dass** das Modul (400) zur Führung aus einem Führungsring besteht, der die Funktion eines Gleitlagers für den Zylinder (110) gewährleistet.

3. Vorrichtung nach Anspruch 1, **dadurch gekennzeichnet, dass** das Modul (400) zur Führung des Hülsenträgers (110) fest mit einer Schutzwand (600) verbunden ist, die den Bearbeitungsbereich vom Antriebsbereich trennt, in dem die Parallelstruktur angeordnet ist und die den Bewegungen des Moduls (400) zur Führung folgt in der vertikalen Ebene senkrecht zur Achse des Hülsenträgers (110).

4. Vorrichtung nach Anspruch 1, **dadurch gekennzeichnet, dass** das Modul (500) zur Stützung des Moduls (400) zur Führung aus wenigstens einem Druckzylinder (510) besteht, wobei das Ende der Stange (511) in gelenkiger Weise dem Modul (400) zur Führung zugeordnet ist und dessen Gehäuse (512) in gelenkiger Weise einer Stelle zugeordnet ist, die bezüglich des Moduls (400) zur Führung feststeht.

5. Vorrichtung nach Anspruch 1, **dadurch gekennzeichnet, dass** das Gleitlager (400), das das Modul zur Führung bildet, ein aerostatisches Lager ist.

6. Vorrichtung nach Anspruch 1, **dadurch gekennzeichnet, dass** der Druckzylinder (510) pneumatisch ist.

7. Werkzeugmaschine mit der Vorrichtung nach Anspruch 1, **dadurch gekennzeichnet, dass** sie eine Schutzwand (600) aufweist, die den Bearbeitungsbereich vom Antriebsbereich trennt und dabei den Bewegungen eines horizontalen beweglichen Bauteils (100) folgt welches sie in einer vertikalen Ebene senkrecht zur Achse des beweglichen Bauteils (100) durchsetzt, wobei das bewegliche Bauteil (100) durch ein aerostatisches Lager (400) geführt wird, das fest mit der Schutzwand (600) verbunden ist und dessen im Antriebsbereich angeordneter Abschnitt gelenkig mit dem Ende der Stange (511) eines Ausgleichsdruckzylinders (510) verbunden ist, dessen Gehäuse (512) gelenkig mit dem Gestell der Werkzeugmaschine verbunden ist.

8. Werkzeugmaschine nach Anspruch 7, **dadurch gekennzeichnet, dass** die Betätigungsteile, die die Bewegung der Enden der mit ihnen verbundenen Positionierarme (310,320) gewährleisten, Linearmotoren sind, die an Führungsanordnungen angekoppelt sind, welche fest mit dem Gestell der Werkzeugmaschine verbunden sind.

9. Werkzeugmaschine nach Anspruch 8, bei der die Linearmotoren aus einem Primärblock (720) und einem Sekundärblock (710) bestehen, **dadurch gekennzeichnet, dass** diese Motoren einem ihnen gegenüberliegenden symmetrischen Balken (800) zugeordnet sind, dessen Querschnitt wenigstens einen ebenen Abschnitt (810) aufweist zur beidseitigen Aufnahme der Sekundärblöcke (710) der beiden Linearmotoren und der wenigstens einem Hauptführungsteil (211) genannten Führungsteil zugeordnet ist zur Erzeugung einer Linearbewegung zwischen dem Primärblock (720) und dem Sekundärblock (710) der Linearmotoren.

10. Werkzeugmaschine nach Anspruch 9, **dadurch gekennzeichnet, dass** die Primärblöcke (720) der Linearmotoren sich gegenüberliegend und im Abstand voneinander angeordnet sind mittels eines Gehäuses, das wenigstens ein Sekundärführungsteil genanntes Führungsteil aufweist, das zusätzlich zum Hauptführungsteil (211) vorgesehen ist, wobei die Anordnung aus Balken (800), Sekundärblöcken (710) und Hauptführungselement (211) in dieses Gehäuse dergestalt eingesetzt ist, dass die Primärblöcke (720) den ihnen zugeordneten Sekundärblöcken (710) gegenüberliegen und dass die Führung der Verschiebebewegung zwischen den verschiedenen Blöcken der Linearmotoren durch die Zuordnung der Hauptführungsteile (211) und der Sekundärführungsteile gewährleistet ist.

11. Werkzeugmaschine nach Anspruch 10, **dadurch gekennzeichnet, dass** das die Primärblöcke (720) tragende Gehäuse beweglich ist relativ zum die Sekundärblöcke (710) tragenden Balken (800), der feststeht und fest mit dem Gestell der Werkzeugmaschine verbunden ist.

12. Werkzeugmaschine nach Anspruch 9, **dadurch gekennzeichnet, dass** der Aufbau (C) des Gestells der Werkzeugmaschine in seiner Aussenform im wesentlichen die Gestalt eines gleichseitigen Dreiecks aufweist, in dessen Winkeln die Tragbalken (800) der beweglichen Abschnitte (220) der Betätigungsteile (200) angeordnet sind.

13. Werkzeugmaschine nach Anspruch 7, **dadurch gekennzeichnet, dass** sie sowohl zum Einsatz in einer Hochgeschwindigkeitsmaschine vom Typ Teilezufuhr als auch in einer Universalbearbeitungsmaschine zum Lochen, Senken, Gewindeschneiden und Bohren bestimmt und vollständig umrüstbar für andere Bearbeitungsvorgänge ist.
